# EUROPEAN PATENT APPLICATION

(11) **EP 2 317 233 A1**
(43) Date of publication of application: **04.05.2011**
(21) Application number: 09382232.8
(22) Date of filing: 28.10.2009
(51) Int. Cl.: F24D 3/10, F24H 9/12, F24H 9/14, F16K 15/00, F23D 3/08, G05D 23/00, F24D 19/10

(54) **A three-way valve for a combined system**

(71) Applicant: ORKLI, S. COOP., 20240 Ordizia (Gipuzkoa) (ES)
(72) Inventor: Mujica Estensoro, Mikel, 20200 Beasain (ES)
(74) Representative: Igartua, Ismael

(57) **Abstract**

A three-way valve for a combined system, the combined system comprising the three-way valve (100), a solar panel (201), a mixer valve (202), and heating means (203). The valve (100) comprises a water intake (1) for receiving water from the solar panel (202), a heater outlet (2) for evacuating the water to the heater (201), a mixer outlet (3) for evacuating the water to the mixer valve (202), a thermostatic actuator (4) to cause the water to pass to the heating means (203) or the mixer valve (202), and a main chamber (6) that comprises the heater and mixer outlets (2, 3). The valve (100) also comprises a reception chamber (7) where the actuator (4) is disposed, which comprises the water intake (1) and which is connected to the main chamber (6) by means of a pipe (20) through which the water passes from said reception chamber (7) to the main chamber (6), and a diverting element (5) in said main chamber (6) and connected to the actuator (4). Said actuator (4) is able to cause the diverting element (5) to move from a rest position (Pr), where it enables the water to pass to the heating means (203), to an operating position (Pa), where it enables the water to pass to the mixer valve (202).

## Description

### TECHNICAL FIELD

The present invention relates to valve units, and more specifically to valve units used in combined systems that also comprise at least one solar panel and heating means adapted for heating water.

### PRIOR ART

Generally, sanitary hot water is obtained by using heating means to heat cold water originating from a general water outlet. When the water is to be heated the heating means are switched on to increase the temperature of the water and thereby provide hot water. The hot water reaches a mixer valve, to which cold water from the general water intake is also supplied, and the user selects the required temperature, said mixer valve mixing a suitable proportion of hot and cold water to obtain said required temperature. The heating means normally require artificial energy sources, which use for such a purpose fuel such as diesel oil and gas or electricity and which consume a large amount of energy.

Combined systems have recently appeared on the market and avoid complete dependence on artificial energy sources by reducing their use and incorporating at least one solar panel and a three-way valve. The solar panel comprises a water pipe that generally takes the form of a coil, the water being heated by the effect of solar heat (a source of natural energy). The combined system uses this water, thereby avoiding the use in some cases of heating means, or reducing their use in other cases. The mixer valve is able, thus, to be supplied with cold water from the general water intake, hot water from the heating means or directly with hot water from the solar panel. These combined systems also comprise a three-way valve to cause the mixer valve to be supplied with hot water from the heating means or from the solar panel.

The three-way valves can be operated electrically. For this purpose, the combined system comprises an actuator or electrical motor connected to said valve, at least one temperature sensor to measure the temperature of the water originating from the solar panel, and control means to cause the electrical motor to operate when they determine that the temperature of the water from said solar panel is equal to or greater than a preset value. When the electrical motor is operated, it causes the closure of the passage of the water to the heating means and enables the passage of water to the mixer valve, the opposite occurring in the event that it is not operated.

Although this solution enables a reduction in the energy consumption of the heating means and in the wastage of water, it achieves this by incorporating electrical means that also consume energy and which also comprise additional elements that may make the product more expensive, as well as wiring, which may slow down its installation, for example. The document W02009063308A2 discloses a three-way valve that does not require electrical elements such as a motor or control means. The three-way valve comprises a thermostatic actuator that operates according to the temperature of the water originating from the solar panel, enabling water to pass to the heating means when said temperature is below a certain value, and enabling water to pass to the mixer valve when said temperature is above said certain value.

### DISCLOSURE OF THE INVENTION

It is an object of the invention to provide a valve as described in the claims.

The three-way valve of the invention is used in combined systems of the type that comprise, in addition to said valve, at least one solar panel, a mixer valve and heating means communicated with each other. The valve comprises an intake through which it receives water from the solar panel, a heater outlet through which the water may be directed to the heating means, a mixer outlet through which the water may be directed to the mixer valve, a thermostatic actuator to cause the water to be directed to the heating means or the mixer valve, and a chamber that comprises the heater outlet and the mixer outlet.

The valve also comprises a reception chamber that comprises the intake and which is communicated with the chamber only by means of an external pipe through which the water passes from said reception chamber to the chamber, and a diverting element disposed in the reception chamber, which can be in a rest position in which it enables the passage of water through the heater outlet and closes its passage through the mixer outlet, and in an operating position in which it enables the passage of water through said mixer outlet and closes its passage in a sealed manner through said heater outlet, being moved from one position to another by means of the thermostatic actuator.

As a result, water from the three-way valve is prevented from reaching the heating means when the thermostatic actuator causes the diverting element to move to its operating position.

These and other advantages and characteristics of the invention will be made evident in the light of the drawings and the detailed description thereof.

### DESCRIPTION OF THE DRAWINGS

Figure 1 shows an embodiment of the valve of the invention, disposed in a combined system.
Figure 2 shows a valve unit formed by a mixer valve and a valve according to Figure 1.
Figure 3 is a cross-sectional view of the valve of Figure 1, with a diverting element of said valve in its rest position.
Figure 4 is a cross-sectional view of the valve of Figure 1, with a diverting element of said valve in its operating position.

### DETAILED DISCLOSURE OF THE INVENTION

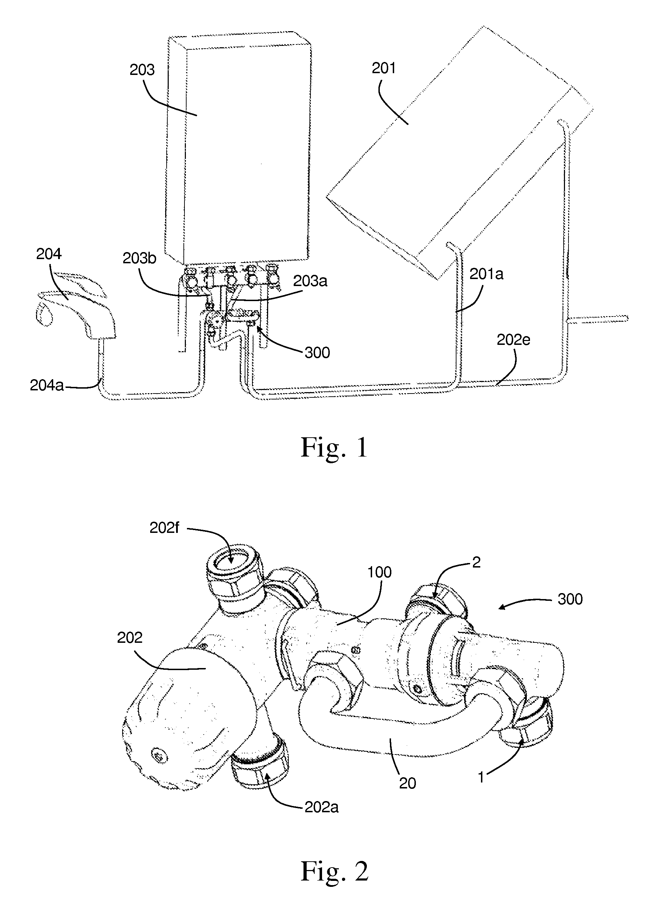

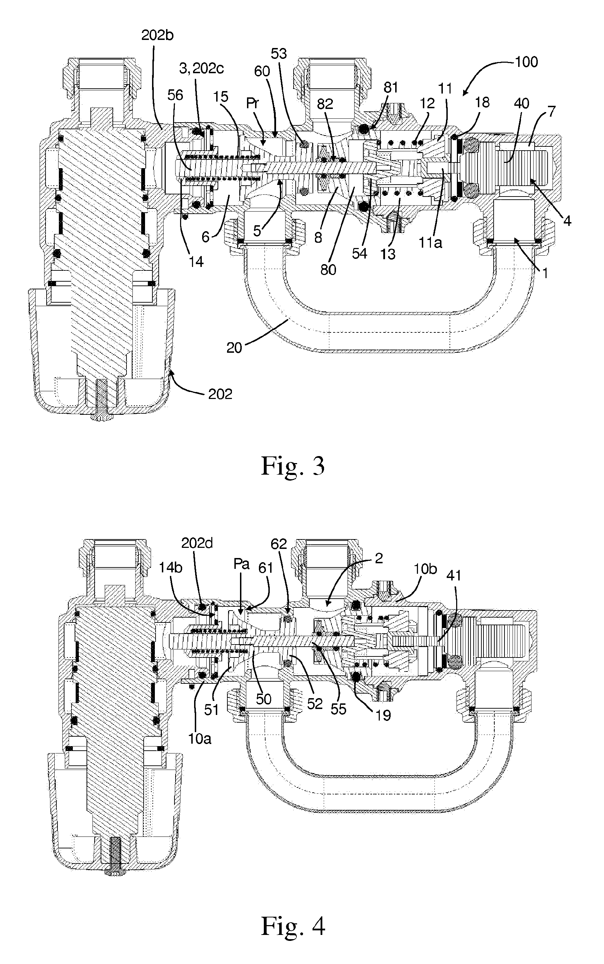

Figures 1 and 2 show an embodiment of the three-way valve 100 of the invention, which is adapted for using in a combined system such as the one shown in Figure 3. The combined system comprises, in addition to the valve 100 of the invention, at least one solar panel 201 that comprises a water circuit (not shown in the Figures), a mixer valve 202, and heating means 203, said valve 100 being communicated with the mixer valve 202, the solar panel 201 and the heating means 203. The heating means 203 may comprise an immersion heater, a heater, a boiler or any other known device that may be used to heat sanitary water or to heat a heating system, for example.

The valve 100 of the invention is known as a three-way valve because it has three ways to enable its external connection. The three ways of said valve 100 correspond to a water intake 1 through which it receives water from the solar panel 202, a heater outlet 2 through which the water may pass to the heating means 203, and a mixer outlet 3 through which the water may pass to the mixer valve 202. Said valve 100 is communicated with the heating means 203 and the solar panel 201 by means of pipes 203a and 201a respectively, and is preferably attached to the mixer valve 202, although it may be communicated said valve 100 by means of a pipe (not shown in the figures) designed for such a purpose. As the valves 100 and 202 are attached to each other, a compact valve unit 300 is generated, as shown in Figure 2 for example.

The valve 100 also comprises a thermostatic actuator 4 to cause the water to pass to the heating means 203 through the heater outlet 2 or to the mixer valve 202 through the mixer outlet 3. When the water from the solar panel 201 comprises a temperature equal to or greater than a preset temperature, the thermostatic actuator 4 causes said water to pass directly to the mixer valve 202 without passing through the heating means 203. If this is not the case, said thermostatic actuator 4 causes said water to pass to the heating means 203 so that said heating means 203 are able to heat it to at least said predetermined temperature, said water reaching the mixer valve 202 from said heating means 203 through a pipe 203b and an inlet 202f. The mixer valve 202 also comprises an additional inlet 202a through which cold water from a general water intake reaches said mixer valve 202, through a pipe 202e, and in said mixer valve 202 a suitable proportion of said cold water is mixed with the hot water from the heating means 203 or the valve 100 to provide water with a temperature selected by a user, to a tap 204 or a shower for example, through a pipe 204a.

The thermostatic actuator 4 is of the type that comprises an actuator body 40 and rod 41 connected to each other but being capable of moving in relation to each other. The actuator body 40 houses a material that expands with the temperature, which preferably corresponds with a type of wax, so that when said actuator body 40 is heated to a preset temperature, the expandable material expands and pushes the rod 41, said actuator body 40 and said rod 41 moving in relation to each other. The preset temperature may be selected beforehand, and for that reason one or another type of expandable material is used and/or a certain amount of expandable material. Normally, the temperature that is selected to enable or prevent the passage of water to the heating means 203 is 45º. This prevents excessively hot water from affecting the components of said heating means 203, which may result in the heating means 203 deteriorating or breaking. The valve 100 of the invention is adapted for operating with heating means 203 that can withstand temperatures in the water of up to 60º, the preset temperature corresponding to 60º. If the heating means 203 used cannot withstand these temperatures the valve 100 of the invention may be adapted to new requirements with the incorporation of a thermostatic actuator 4 adapted for expanding with a preset temperature other than 60º.

The valve 100 comprises a reception chamber 7 that comprises the water intake 1 and which houses the thermostatic actuator 4, said thermostatic actuator 4 directly receiving the water from the solar panel 201, it being capable of operating in accordance with the temperature of said water. Said valve 100 also comprises a main chamber 6 that comprises the heater outlet 2 and the mixer outlet 3. Both chambers 6 and 7 may be covered by the same external casing, although preferably the main chamber 6 is covered by a first casing 10a while the reception chamber 7 is covered by a second casing 10b, both casings being attached to each other, as shown in the figures. Both chambers 6 and 7 are also insulated in a sealed manner from each other by means of sealing means 19, and are connected only by a through pipe 20 through which the water passes from said reception chamber 7 to the main chamber 6, said through pipe 20 preferably being external to the casings 10a and 10b.

The valve 100 also comprises a diverting element 5 disposed in the reception chamber 7, which is communicated with the thermostatic actuator 4 and moves in conjunction with said thermostatic actuator 4. The actuator body 40 of the thermostatic actuator 4 is housed in a fixed manner in the reception chamber 7, as a result of which it is the rod 41 that moves in relation to the actuator body 40 when said actuator body 40 equals or exceeds the preset temperature. The diverting element 5 is thus joined to the rod 41 and moves in conjunction with it, and is disposed in a rest position Pr when the temperature of the water from the solar panel 201 is lower than the preset temperature, a position shown in Figure 1, and in an operating position Pa when said temperature is equal to or greater than said preset temperature, a position shown in Figure 2. Hence, in the rest position Pr the valve 100 enables the passage of water to the heating means 203 through the heater outlet 2 and prevents the passage of water through the mixer outlet 3, and in the operating position Pa it enables the passage of water to the mixer valve 202 through said mixer outlet 3 and closes the passage of water through the heater outlet 2 in a sealed manner.

In order to prevent water at temperatures exceeding the preset temperature from reaching the heating means 203 and affecting said heating means 203, the diverting element 5 comprises sealing means 53, preferably a ring seal, which close, in a sealed manner, the heater outlet 2 when said diverting element 5 is in the operating position Pa. The main chamber 6 comprises a throttling area 60 delimited between two areas 61 and 62 of said main chamber 6, and the diverting element 5 comprises a main body 50 disposed, at least partially, in said throttling area 60, and a first projection 51 and a second projection 52 that project out from each side of said throttling area 60, the ring seal being disposed in the second projection 52. When said diverting element 5 is in the rest position Pr, the first projection 51 cooperates with the first area 61 to prevent the passage of water through the mixer outlet 3, and for such a purpose both the first projection 51 and the first area 61 preferably comprise a sloping wall. When the diverting element 5 is in the operating position Pa, the ring seal cooperates with the second area 62 in order to close, in a sealed manner, the passage of water through the heater outlet 2, and for such a purpose the second projection 52 comprises a housing to house said ring seal, with the result that it projects out. The second area 62 comprises an axial wall that cooperates with said seal to provide sealed closure.

The valve 100 also comprises a limiting element 8 that is fixed to the first casing 10a and which closes at one end the main chamber 6 to prevent communication between said main chamber 6 and the reception chamber 7, said limiting element 8 also preferably comprising a housing 81 to house the sealing means 19, which provide sealed closure between both chambers 6 and 7, which preferably correspond to a ring seal, although the housing may be in the first casing 10a instead of in said limiting element 8. The limiting element 8 comprises a cavity 80 opposite to said main chamber 6, where an actuator end 54 of the diverting element 5 is housed, the thermostatic actuator 4 being joined to said diverting element 5 by said actuator end 54. The cavity 80 comprises a width that enables a preset movement (equal to said width) of the actuator end 54 of the diverting element 5 and therefore of said diverting element 5, which corresponds to the movement of the rod 41 of the thermostatic actuator 4 that is necessary to allow the diverting element 5 to move from the rest position Pr to the operating position Pa. The diverting element 5 also comprises a extended part 55 in the form of a rod that joins a main body 50 of said diverting element 5 with its actuator end 54, the limiting element 8 comprising a through hole 82 through which said extended part 55 passes.

Normally, the possible movement of the rod 41 is greater than the movement corresponding to the width of the cavity 80, the valve 100 thus comprising compensating means to compensate a movement of said rod 41 that is greater than said movement. The compensating means comprise a compensating element 11 associated to the rod 41 and facing the actuator end 54 of the diverting element 5, a compensating spring 12 fixed at one end to the compensating element 11 and at the other end to the diverting element 5 (to the actuator end 54 of said diverting element 5), and a compensating chamber 13 disposed between the main chamber 6 and the auxiliary chamber 7, which is covered by the second casing 10b and which houses the compensating element 11 and the compensating spring 12. As a result, when the rod 41 moves beyond the width of the cavity 80, the compensating spring 12 is compressed and absorbs said additional movement without this affecting said diverting element 5. In order to insulate the compensating chamber 13 of the reception chamber 11 in a sealed manner, the second casing 10b comprises a housing in which are disposed sealing means 18, which correspond to a ring seal. The compensating element 11 comprises a housing 11a in which is housed the rod 41 of the thermostatic actuator 4, with the result that when said rod 41 moves it pushes the compensating element 11, which moves in conjunction with said rod 41, which in turn causes the diverting element 5 to move and the compensating spring 12 to compress as the rod 41 continues to move after having moved the width of the cavity 80.

The rod 41 of the thermostatic actuator 4 does not return to its initial position by itself, the valve 100 thus comprising return means designed to cause said rod 41 to return to said initial position. The return means comprise a return element 14 disposed without freedom of movement in the reception chamber 7, facing the first projection 51 of the diverting element 5, and a return spring 15 fixed at one end to said return element 14 and at the other end to the diverting element 5. Said diverting element 5 comprises an extended part 56 that extends towards the mixer outlet 3, and the return element 14 comprises a hole through which said extended part 56 passes, the return spring 15 being disposed around said extended part 56. When the diverting element 5 moves due to the movement of the rod 41, the return spring 15 is compressed. When the temperature of the actuator body 40 drops below the preset temperature, the rod 41 stops pushing on the diverting element 5 and the return spring 15 returns to its initial position causing said diverting element 5 to move to its rest position Pr. The return element 14 comprises at least one through hole 14b through which hot water from the mixer outlet 3 reaches the mixer valve 202. If the rod 41 has moved beyond the distance necessary to cause the diverting element 5 to move from the rest position Pr to the operating position Pa, when the temperature of the actuator body 40 drops below the preset temperature, the compensating spring 12 also returns to its original position, causing, along with the action of the return spring 15, said rod 41 to return to its initial position. The return element 14 is fixed to the first casing 10a, on the end of the main chamber 6 opposite the end where the limiting element 8 is disposed.

The mixer valve 202 comprises a mixer inlet that comprises a casing 202b and an opening 202c delimited by said casing 202b. The casing 202b is attached to the first casing 10a of the valve 100, with sealing means 202d being disposed between both casings 202b and 10a to prevent water being lost through the connection. The opening 202c corresponds with the mixer outlet 3 of the valve 100.

## Claims

**1.** Three-way valve for a combined system,
the combined system comprising the three-way valve (100), at least one solar panel (201), a mixer valve (202), and heating means (203),
and the valve (100) comprising
a water intake (1) through which it receives water from the solar panel (202),
a heater outlet (2) through which the water may pass to the heating means (203),
a mixer outlet (3) through which the water may pass to the mixer valve (202),
a thermostatic actuator (4) to cause the water to pass to the heating means (203) through the heater outlet (2) or to the mixer valve (202) through the mixer outlet (3), and
a main chamber (6) that comprises the heater outlet (2) and the mixer outlet (3),
**characterised in that**
the valve (100) also comprises
a reception chamber (7) where the thermostatic actuator (4) is disposed, which comprises the water intake (1) and which is communicated with the main chamber (6) by means of a through pipe (20) through which the water passes from said reception chamber (7) to the main chamber (6), and
a diverting element (5) disposed in the main chamber (6) and associated to the thermostatic actuator (4), so that said thermostatic actuator (4) is able to cause the diverting element (5) to move from a rest position (Pr) where it enables the passage of water through the heater outlet (2) and prevents said passage through the mixer outlet (3), to an operating position (Pa) where it enables the passage of water through the mixer outlet (3) and closes said passage through the heater outlet (2) in a sealed manner.

**2.** Valve according to claim 1, wherein the diverting element (5) comprises sealing means (53) to provide a sealed closure between the main chamber (6) and the heater outlet (2) when said diverting element (5) closes the passage of water through said heater outlet (2).

**3.** Valve according to claim 2, wherein the main chamber (6) comprises a throttling area (60) delimited between a first area (61) and a second area (62) of said main chamber (6), and the diverting element (5) comprises a main body (50) disposed, at least partially, in said throttling area (60), and a first projection (51) and a second projection (52) that project out from each side of said throttling area (60), the first projection (51) cooperating with the first area (61) in order to close the passage of water through the mixer outlet (3), and the second projection (52) cooperating with the second area (62) in order to close the passage of water through the heater outlet (2), the sealing means being disposed in said second projection (52).

**4.** Valve according to any of the preceding claims, wherein the thermostatic actuator (4) comprises an actuator body (40) disposed without freedom of movement in the reception chamber (7), and a rod (41) that is movable in relation to the actuator body (40) according to the temperature of the water that enters said reception chamber (7) through the inlet (1), the diverting element (5) being associated to said rod (41).

**5.** Valve according to claim 4, which comprises a limiting element (8) that closes the main chamber (6) at one end and which comprises a cavity (80) opposite to said main chamber (6), where an actuator end (54) of the diverting element (5) is housed, the thermostatic actuator (4) being associated to said diverting element (5) by means of said actuator end (54), and the cavity (80) comprising a width (A) that enables a preset movement of said rod that corresponds with the movement necessary for the diverting element (5) to move from the rest position (Pr) to the operating position (Pa).

**6.** Valve according to claim 5, wherein the diverting element (5) comprises an extended part (55) in the form of a rod that joins its main body (50) with its actuator end (54), and the limiting element (8) comprises a through hole (82) through which said extended part (55) passes.

**7.** Valve according to any of claims 5 or 6, wherein the limiting element (8) comprises sealing means (81) for closing one end of the main chamber (6) in a sealed manner.

**8.** Valve according to any of claims 4 to 7, which comprises compensating means to compensate a movement of the rod (41) of the thermostatic actuator (4) that is greater than the movement necessary for the diverting element (5) to move from the rest position (Pr) to the operating position (Pa), which comprise a compensating element (11) fixed to said rod (41) and facing the actuator end (54) of the diverting element (5), and a compensating spring (12) fixed at one end to the compensating element (11) and at the other end to the actuator end (54).

**9.** Valve according to claim 8, which comprises a compensating chamber (13) disposed between the main chamber (6) and the reception chamber (7), the compensating spring (12) and the compensating element (11) being disposed in said compensating chamber (13).

**10.** Valve according to any of the preceding claims, which comprises return means to cause the diverting element (5) to move to its rest position (Pr), said return means comprising a return element (14) that is disposed without freedom of movement in the main chamber (6), between the diverting element (5) and the mixer outlet (3), and a return spring (15) fixed at one end to said return element (14) and at the other end to the diverting element (5).

**11.** Valve according to claim 10, wherein the diverting element (5) comprises an extended part (56) that extends towards the mixer outlet (3), and the return element (14) comprises a hole that said extended part (56) may pass through, the return spring (15) being disposed around said extended part (56).

**12.** Valve according to any of claims 10 and 11, wherein the return element (14) comprises at least one through hole (14b) through which the water arrives from the main chamber (6) to the mixer outlet (3), when the diverting element (5) enables the passage of water through said mixer outlet (3).

**12.** Valve unit
**characterised in that**
it comprises a mixer valve (202) and a three-way valve (100) according to any of the preceding claims.

**13.** Combined system that comprises at least one solar panel (201), a mixer valve (202), and a heater (202),
**characterised in that**
it also comprises a three-way valve (100) according to any of claims 1 to 12.
